# EUROPEAN PATENT SPECIFICATION

(11) **EP 1 793 506 B1**
(45) Date of publication and mention of the grant of the patent: **02.01.2008**
(21) Application number: 05257372.2
(22) Date of filing: 30.11.2005
(51) Int. Cl.: H04B 1/40, G06F 1/04

(54) **Mobile wireless communications device having buffered clock distribution network for a microprocessor and RF circuits**
Mobiles Funkkommunikationsgerät mit einem gepufferten Taktverteilungsnetzwerk für einen Mikroprozessor und Hochfrequenzschaltungen
Dispositif de communication avec un réseau de distribution d'horloge tampon pour un microprocesseur et circuits de haute fréquence

(43) Date of publication of application: 06.06.2007
(73) Proprietor: Research In Motion Limited, Waterloo, Ontario N2L 3W8 (CA)
(72) Inventor: Zhu, Lizhong, Waterloo, Ontario N2T 2T8 (CA); Grant, Robert, Lostowel, Ontario N4W 3G8 (CA)
(74) Representative: Hibbert, Juliet Jane Grace

(56) References cited:
- EP-A- 1 003 289
- US-A- 5 157 356
- US-B1- 6 484 038
- US-B1- 6 550 045

## Description

### Field of the Invention

The present invention relates to the field of communications device, and more particularly, this invention relates to mobile wireless communications devices and related methods.

### Background of the Invention

Mobile wireless communications devices, such as cellular telephones and similar communications devices, include a housing and circuit board carried by the housing. A microprocessor, radio frequency (RF) transceiver and RF circuitry can be carried by the circuit board and operative with each other. An antenna could be located external or within the housing. A clock, such as a crystal oscillator, could be positioned external to the components and off the circuit board or mounted on the circuit board, and provide a clocking signal to the microprocessor, RF transceiver and other RF circuitry, including any Bluetooth modules, phase locked loop circuits, and local oscillator (LO) circuits. Typically, spurious signals and jitters caused by digital noise from a microprocessor creates problems because it shares the same clock with the RF circuits, such as the reference clock input to the phase locked loop. The clock from the crystal oscillator provides the reference clock input signal to both the RF circuits, such as the phased locked loop circuit, RF circuits and digital circuits, such as the microprocessor, but without buffering.

The microprocessor generates many digital noises that find their way back from the clock reference input of the microprocessor to the reference clock lines with which the RF circuits are sharing. These digital noises are conductively coupled to the RF circuits, including any RF transceiver, Bluetooth module and other RF circuits, such as a local oscillator and phase locked loop circuits, to cause spurious signals and jitters in the circuits, which in turn, degrade the RF performance or cause a radio to fail certain specifications. EPO 1003289 discloses a portable radio device including a frequency synthesizer, a digital control circuit and a reference signal generator. US 6484038 discloses a method and apparatus for generating a plurality of reference frequencies in a mobile phone using a common crystal reference oscillator.

### Summary of the Invention

The present invention is set out in the independent claims. Some optional features are set out in the claims dependent thereto.

A mobile wireless communications device includes a housing and a circuit board carried by the housing. A microprocessor, a radio frequency (RF) transceiver and RF circuitry are carried by the circuit board and operative with each other. Clock buffer circuitry is carried by the circuit board and connected to the RF transceiver, RF circuitry and microprocessor for isolating a clock signal from the noise of the microprocessor and allowing greater isolation for the RF transceiver from RF circuitry. The clock buffer circuitry is formed as a plurality of serially connected buffers each having an output connected to a predetermined one of the RF circuitry and microprocessor.

In accordance with one non-limiting embodiment, the RF circuitry includes a Bluetooth module and the clock buffer circuitry is connected to the Bluetooth module for isolating a clock signal after the RF transceiver. The RF circuitry could also include a phase locked loop circuit and the clock buffer circuitry is connected to the phase locked looped circuit for isolating a clock signal after the RF transceiver and Bluetooth module.

In yet another non-limiting example, the RF transceiver is formed as a GSM/GPRS (Global System for Mobile communications/General Packet Radio Service) system. Each buffer could provide about 40 to about 80 decibels of reversed isolation from its output to its input in a non-limiting example. The plurality of serially connected buffers could also be formed as transistors connected as emitter followers. The housing can be configured for handheld operation and the RF transceiver, RF circuitry and microprocessor can be operative as a cellular communications device. An antenna could be carried by the housing and operative with the RF transceiver.

### Brief Description of the Drawings

Other objects, features and advantages of the present invention will become apparent from the detailed description of the invention which follows, when considered in light of the accompanying drawings in which:

FIG. 1 is a schematic block diagram of an example of a mobile wireless communications device figured as a handheld device and illustrating basic internal components thereof such as can be used in one non-limiting embodiment.

FIG. 2 is a front elevation view of the mobile wireless communications device of FIG. 1.

FIG. 3 is a schematic block diagram showing basic functional circuit components that can be used in the mobile wireless communications device of FIGS. 1 and 2.

FIG. 4 is a schematic block diagram showing basic components of a radio transceiver and other RF circuits such as a Bluetooth module, and phase locked loop circuit operative with the microprocessor and showing the clock buffer circuitry.

FIGS. 5A-5C are interrelated schematic circuit diagrams showing a microprocessor (FIG. 5B) connected to clock buffer circuitry, such as shown in FIG. 5C.

FIG. 6 is a block diagram of a typical Bluetooth module that can be used with the mobile wireless communications device shown in FIGS. 1-4 and 5A-5C.

### Detailed Description of the Preferred Embodiments

Different embodiments will now be described more fully hereinafter with reference to the accompanying drawings, in which preferred embodiments are shown. Many different forms can be set forth and described embodiments should not be construed as limited to the embodiments set forth herein. Rather, these embodiments are provided so that this disclosure will be thorough and complete, and will fully convey the scope to those skilled in the art. Like numbers refer to like elements throughout, and prime notation is used to indicate similar elements in alternative embodiments.

In various embodiments, the clock buffer circuitry is formed as a cascaded clock buffer circuit and reduces digital noise as spurious jitters from a microprocessor that shares the same clock with various RF circuits, such as a reference clock input to phased locked loops. A clock signal can be generated from a crystal oscillator and provide a reference clock input signal to RF circuits, such as a phased locked loop and other digital circuits, for example, the microprocessor. Because the microprocessor generates digital noises that pass from the clock reference input of the microprocessor to the reference clock lines with which the RF circuits are sharing, these digital noises can be conductively coupled to the RF circuits and cause spurious signals and jitters in the local oscillator circuits, which degrade the RF performance and cause the radio to fail certain specifications.

Different embodiments show that different clock signals can be isolated from the noise of the microprocessor. More sensitive RF circuits, for example, the GSM/GPRS chip set, could be connected to the crystal oscillator output first with proper impedance matching. The output of a first buffer circuit could be connected to a less sensitive RF circuit, for example, a Bluetooth module or chip. The buffer circuit could provide about 40 to about 80 decibel reversed isolation from its output to the input. Other buffer circuits could be included with separate isolation.

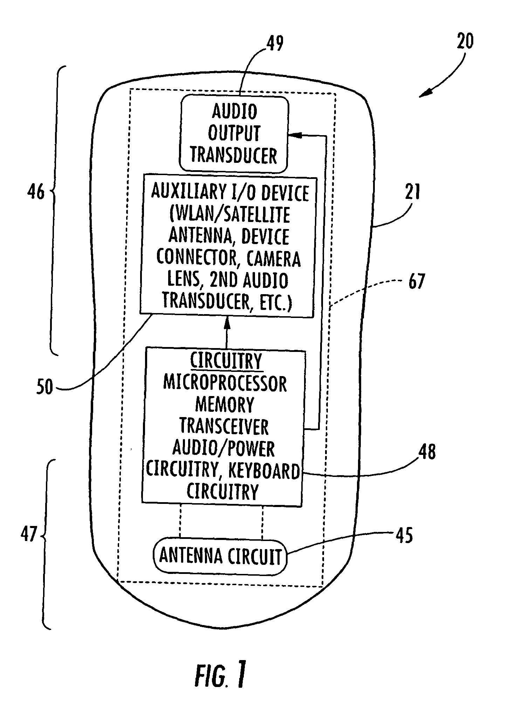

A brief description will now proceed relative to FIGS. 1-3, which disclose an example of a mobile wireless communications device, for example, a handheld portable cellular radio, which can incorporate the non-limiting examples of the various buffering circuits and clock distribution network. FIGS. 1-3 are representative non-limiting examples of the many different types of functional circuit components and their interconnection, and operative for use with the clock distribution network and buffering circuits as described.

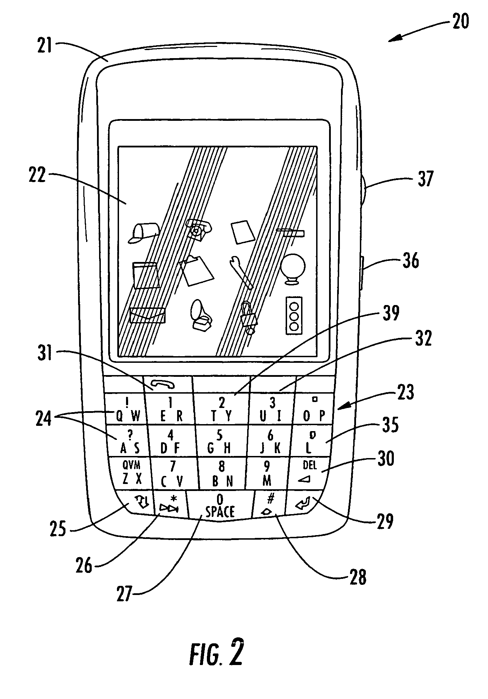

Referring initially to FIGS. 1 and 2, an example of a mobile wireless communications device **20,** such as a handheld portable cellular radio, which can be used with the present invention is first described. This device **20** illustratively includes a housing **21** having an upper portion **46** and a lower portion **47,** and a dielectric substrate (i.e., circuit board) **67,** such as a conventional printed circuit board (PCB) substrate, for example, carried by the housing. A housing cover (not shown in detail) would typically cover the front portion of the housing. The term circuit board **67** as used hereinafter can refer to any dielectric substrate, PCB, ceramic substrate or other circuit carrying structure for carrying signal circuits and electronic components within the mobile wireless communications device **20.** The illustrated housing **21** is a static housing, for example, as opposed to a flip or sliding housing which are used in many cellular telephones. However, these and other housing configurations may also be used.

Circuitry **48** is carried by the circuit board **67,** such as a microprocessor, memory, one or more wireless transceivers (e.g., cellular, WLAN, etc.), which includes RF circuitry, including audio and power circuitry, including any keyboard circuitry. It should be understood that keyboard circuitry could be on a separate keyboard, etc., as will be appreciated by those skilled in the art. A battery (not shown) is also preferably carried by the housing **21** for supplying power to the circuitry **48.** The term RF circuitry could encompass the interoperable RF transceiver circuitry, power circuitry and audio circuitry.

Furthermore, an audio output transducer **49** (e.g., a speaker) is carried by an upper portion **46** of the housing **21** and connected to the circuitry **48.** One or more user input interface devices, such as a keypad (keyboard) **23** (FIG. 2), is also preferably carried by the housing **21** and connected to the circuitry **48.** The term keypad as used herein also refers to the term keyboard, indicating the user input devices having lettered and/or numbered keys commonly known and other embodiments, including multi-top or predictive entry modes. Other examples of user input interface devices include a scroll wheel **37** and a back button **36.** Of course, it will be appreciated that other user input interface devices (e.g., a stylus or touch screen interface) may be used in other embodiments.

An antenna **45** is preferably positioned at the lower portion **47** in the housing and can be formed as a pattern of conductive traces that make an antenna circuit, which physically forms the antenna. It is connected to the circuitry **48** on the main circuit board **67.** In one non-limiting example, the antenna could be formed on an antenna circuit board section that extends from the circuit board at the lower portion of the housing. By placing the antenna **45** adjacent the lower portion **47** of the housing **21,** the distance is advantageously increased between the antenna and the user's head when the phone is in use to aid in complying with applicable SAR requirements. Also, a separate keyboard circuit board could be used.

More particularly, a user will typically hold the upper portion of the housing **21** very close to his head so that the audio output transducer **49** is directly next to his ear. Yet, the lower portion **47** of the housing **21** where an audio input transducer (i.e., microphone) is located need not be placed directly next to a user's mouth, and can be held away from the user's mouth. That is, holding the audio input transducer close to the user's mouth may not only be uncomfortable for the user, but it may also distort the user's voice in some circumstances. In addition, the placement of the antenna **45** adjacent the lower portion **47** of the housing **21** also advantageously spaces the antenna farther away from the user's brain.

Another important benefit of placing the antenna **45** adjacent the lower portion **47** of the housing **21** is that this may allow for less impact on antenna performance due to blockage by a user's hand. That is, users typically hold cellular phones toward the middle to upper portion of the phone housing, and are therefore more likely to put their hands over such an antenna than they are an antenna mounted adjacent the lower portion **47** of the housing **21.** Accordingly, more reliable performance may be achieved from placing the antenna **45** adjacent the lower portion **47** of the housing **21.**

Still another benefit of this configuration is that it provides more room for one or more auxiliary input/output (I/O) devices **50** to be carried at the upper portion **46** of the housing. Furthermore, by separating the antenna **45** from the auxiliary I/O device(s) **50,** this may allow for reduced interference therebetween.

Some examples of auxiliary I/O devices **50** include a WLAN (e.g., Bluetooth, IEEE 802.11) antenna for providing WLAN communication capabilities, and/or a satellite positioning system (e.g., GPS, Galileo, etc.) antenna for providing position location capabilities, as will be appreciated by those skilled in the art. Other examples of auxiliary I/O devices **50** include a second audio output transducer (e.g., a speaker for speaker phone operation), and a camera lens for providing digital camera capabilities, an electrical device connector (e.g., USB, headphone, secure digital (SD) or memory card, etc.).

It should be noted that the term "input/output" as used herein for the auxiliary I/O device(s) **50** means that such devices may have input and/or output capabilities, and they need not provide both in all embodiments. That is, devices such as camera lenses may only receive an optical input, for example, while a headphone jack may only provide an audio output.

The device **20** further illustratively includes a display **22,** for example, a liquid crystal display (LCD) carried by the housing **21** and connected to the circuitry **48.** A back button **36** and scroll wheel **37** can also be connected to the circuitry **48** for allowing a user to navigate menus, text, etc., as will be appreciated by those skilled in the art. The scroll wheel **37** may also be referred to as a "thumb wheel" or a "track wheel" in some instances. The keypad **23** illustratively includes a plurality of multi-symbol keys **24** each having indicia of a plurality of respective symbols thereon. The keypad **23** also illustratively includes an alternate function key **25,** a next key **26,** a space key **27,** a shift key **28,** a return (or enter) key **29,** and a backspace/delete key **30.**

The next key **26** is also used to enter a "*" symbol upon first pressing or actuating the alternate function key **25.** Similarly, the space key **27,** shift key **28** and backspace key **30** are used to enter a "0" and "#", respectively, upon first actuating the alternate function key **25.** The keypad **23** further illustratively includes a send key **31,** an end key **32,** and a convenience (i.e., menu) key **39** for use in placing cellular telephone calls, as will be appreciated by those skilled in the art.

Moreover, the symbols on each key **24** are arranged in top and bottom rows. The symbols in the bottom rows are entered when a user presses a key **24** without first pressing the alternate function key **25,** while the top row symbols are entered by first pressing the alternate function key. As seen in FIG. 2, the multi-symbol keys **24** are arranged in the first three rows on the keypad **23** below the send and end keys **31, 32.** Furthermore, the letter symbols on each of the keys **24** are arranged to define a QWERTY layout. That is, the letters on the keypad **23** are presented in a three-row format, with the letters of each row being in the same order and relative position as in a standard QWERTY keypad.

Each row of keys (including the fourth row of function keys **25-29)** is arranged in five columns. The multi-symbol keys **24** in the second, third, and fourth columns of the first, second, and third rows have numeric indicia thereon (i.e., 1 through 9) accessible by first actuating the alternate function key **25.** Coupled with the next, space, and shift keys **26, 27, 28,** which respectively enter a "*", "0", and "#" upon first actuating the alternate function key **25,** as noted above, this set of keys defines a standard telephone keypad layout, as would be found on a traditional touch-tone telephone, as will be appreciated by those skilled in the art.

Accordingly, the mobile wireless communications device **20** as described may advantageously be used not only as a traditional cellular phone, but it may also be conveniently used for sending and/or receiving data over a cellular or other network, such as Internet and email data, for example. Of course, other keypad configurations may also be used in other embodiments. Multi-tap or predictive entry modes may be used for typing e-mails, etc. as will be appreciated by those skilled in the art.

The antenna **45** is preferably formed as a multi-frequency band antenna, which provides enhanced transmission and reception characteristics over multiple operating frequencies. More particularly, the antenna **45** is designed to provide high gain, desired impedance matching, and meet applicable SAR requirements over a relatively wide bandwidth and multiple cellular frequency bands. By way of example, the antenna **45** preferably operates over five bands, namely a 850 MHz Global System for Mobile Communications (GSM) band, a 900 MHz GSM band, a DCS band, a PCS band, and a WCDMA band (i.e., up to about 2100 MHz), although it may be used for other bands/frequencies as well. To conserve space, the antenna **45** may advantageously be implemented in three dimensions although it may be implemented in two-dimensional or planar embodiments as well.

The mobile wireless communications device shown in FIGS. 1 and 2 can incorporate e-mail and messaging accounts and provide different functions such as composing e-mail, PIN messages, and SMS messages. The device can manage messages through an appropriate menu that can be retrieved by choosing a messages icon. An address book function could add contacts, allow management of an address book, set address book options and manage SIM card phone books. A phone menu could allow for the making and answering of phone calls using different phone features, managing phone call logs, setting phone options, and viewing phone information. A browser application could permit the browsing of web pages, configuring a browser, adding bookmarks, and changing browser options. Other applications could include a task, memo pad, calculator, alarm and games, as well as handheld options with various references.

A calendar icon can be chosen for entering a calendar program that can be used for establishing and managing events such as meetings or appointments. The calendar program could be any type of messaging or appointment/meeting program that allows an organizer to establish an event, for example, an appointment or meeting.

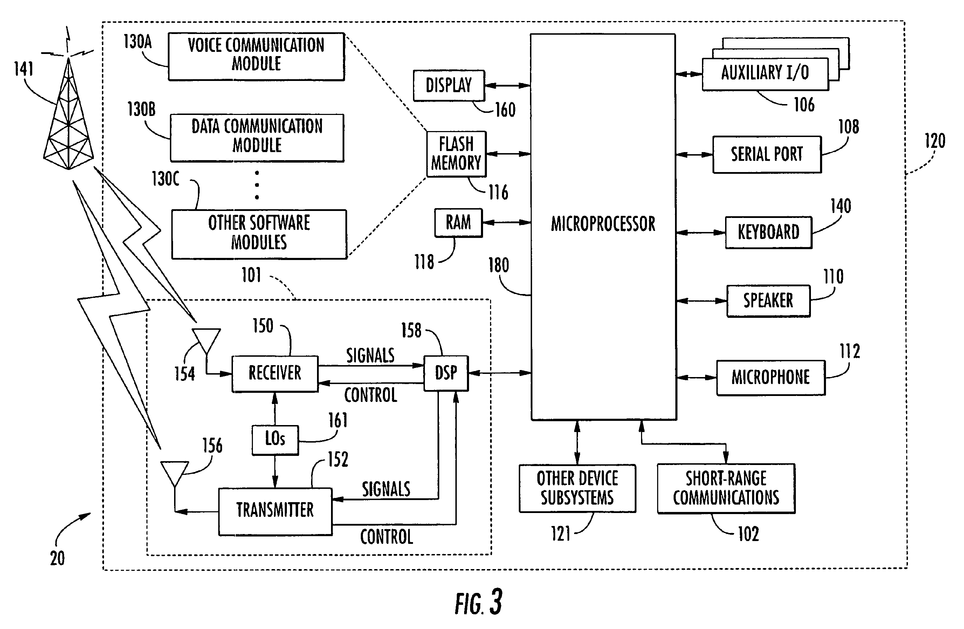

A non-limiting example of various functional components that can be used in the exemplary mobile wireless communications device **20** of FIGS. 1 and 2 is further described in the example below with reference to FIG. 3. The device **20** illustratively includes a housing **120,** a keypad **140** and an output device **160.** The output device **160** shown is preferably a display, which is preferably a full graphic LCD. Other types of output devices may alternatively be used. A processing device **180** is contained within the housing **120** and is coupled between the keypad **140** and the display **160.** The processing device **180** controls the operation of the display **160,** as well as the overall operation of the mobile device **20,** in response to actuation of keys on the keypad **140** by the user.

The housing **120** may be elongated vertically, or may take on other sizes and shapes (including clamshell housing structures). The keypad may include a mode selection key, or other hardware or software for switching between text entry and telephony entry.

In addition to the processing device **180,** other parts of the mobile device **20** are shown schematically in FIG. 3. These include a communications subsystem **101;** a short-range communications subsystem **102;** the keypad **140** and the display **160,** along with other input/output devices **106, 108, 110** and **112;** as well as memory devices **116, 118** and various other device subsystems **121.** The mobile device **20** is preferably a two-way RF communications device having voice and data communications capabilities. In addition, the mobile device **20** preferably has the capability to communicate with other computer systems via the Internet.

Operating system software executed by the processing device **180** is preferably stored in a persistent store, such as the flash memory **116,** but may be stored in other types of memory devices, such as a read only memory (ROM) or similar storage element. In addition, system software, specific device applications, or parts thereof, may be temporarily loaded into a volatile store, such as the random access memory (RAM) **118.** Communications signals received by the mobile device may also be stored in the RAM **118.**

The processing device **180,** in addition to its operating system functions, enables execution of software applications **130A-130N** on the device **20.** A predetermined set of applications that control basic device operations, such as data and voice communications **130A** and **130B,** may be installed on the device **20** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **141.** Preferably, the PIM data items are seamlessly integrated, synchronized and updated via the wireless network **141** with the device user's corresponding data items stored or associated with a host computer system.

Communication functions, including data and voice communications, are performed through the communications subsystem **101,** and possibly through the short-range communications subsystem. The communications subsystem **101** includes a receiver **150,** a transmitter **152,** and one or more antennae **154** and **156.** In addition, the communications subsystem **101** also includes a processing module, such as a digital signal processor (DSP) **158,** and local oscillators (LOs) **161.** The specific design and implementation of the communications subsystem **101** is dependent upon the communications network in which the mobile device **20** is intended to operate. For example, the mobile device **20** may include a communications subsystem **101** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **20.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **20** may send and receive communications signals over the communication network **141.** Signals received from the communications network **141** by the antenna **154** are routed to the receiver **150,** which provides for signal amplification, frequency down conversion, filtering, channel selection, etc., and may also provide analog to digital conversion. Analog-to-digital conversion of the received signal allows the DSP **158** to perform more complex communications functions, such as demodulation and decoding. In a similar manner, signals to be transmitted to the network **141** are processed (e.g., modulated and encoded) by the DSP **158** and are then provided to the transmitter **152** for digital to analog conversion, frequency up conversion, filtering, amplification and transmission to the communication network **141** (or networks) via the antenna **156.**

In addition to processing communications signals, the DSP **158** provides for control of the receiver **150** and the transmitter **152.** For example, gains applied to communications signals in the receiver **150** and transmitter **152** may be adaptively controlled through automatic gain control algorithms implemented in the DSP **158.**

In a data communications mode, a received signal, such as a text message or web page download, is processed by the communications subsystem **101** and is input to the processing device **180.** The received signal is then further processed by the processing device **180** for an output to the display **160,** or alternatively to some other auxiliary I/O device **106.** A device user may also compose data items, such as e-mail messages, using the keypad **140** and/or some other auxiliary I/O device **106,** such as a touchpad, a rocker switch, a thumb-wheel, or some other type of input device. The composed data items may then be transmitted over the communications network **141** via the communications subsystem **101.**

In a voice communications mode, overall operation of the device is substantially similar to the data communications mode, except that received signals are output to a speaker **110,** and signals for transmission are generated by a microphone **112.** Alternative voice or audio I/O subsystems, such as a voice message recording subsystem, may also be implemented on the device **20.** In addition, the display **160** may also be utilized in voice communications mode, for example to display the identity of a calling party, the duration of a voice call, or other voice call related information.

Any short-range communications subsystem enables communication between the mobile device **20** and other proximate systems or devices, which need not necessarily be similar devices. For example, the short-range communications subsystem may include an infrared device and associated circuits and components, or a Bluetooth^{™} communications module to provide for communication with similarly-enabled systems and devices.

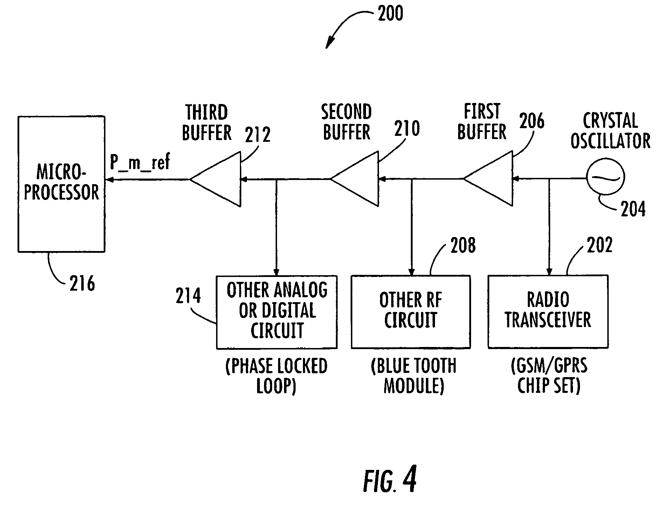

FIG. 4 shows a clock buffering circuit **200,** in accordance with one non-limiting embodiment, where the most sensitive RF circuits, for example, a radio transceiver **202** such as a GSM/GPRS chip set are connected first to a clock **204** such as a crystal oscillator output with proper impedance matching. A first buffer circuit **206** has an input connected to the clock or oscillator output. The output of the first buffer circuit **206** is connected to a less sensitive RF circuit **208,** for example, a Bluetooth chip. This buffer circuit **206** typically could provide about 40 to about 80 decibel (dB) reverse isolation from its output to the input. Therefore, any analog or digital noise is significantly reduced, which might come from either the Bluetooth chip or a second buffer circuit **210.** The second buffer circuit **210** is also connected to the output of the first buffer circuit **206** and to a third buffer circuit **212** and provides another 40 to about 80 decibel reverse isolation from its output. The output of the second buffer circuit **210** could be connected to another analog or digital circuit **214,** for example, a phase locked loop circuit. The output of the third buffer circuit **212** is connected to the reference clock input of the digital microprocessor **216.** By this arrangement, the high level digital noise at the reference clock input of the microprocessor **216** will be reduced by at least about 80 decibels and will have a minimum to no impact to the RF performance.

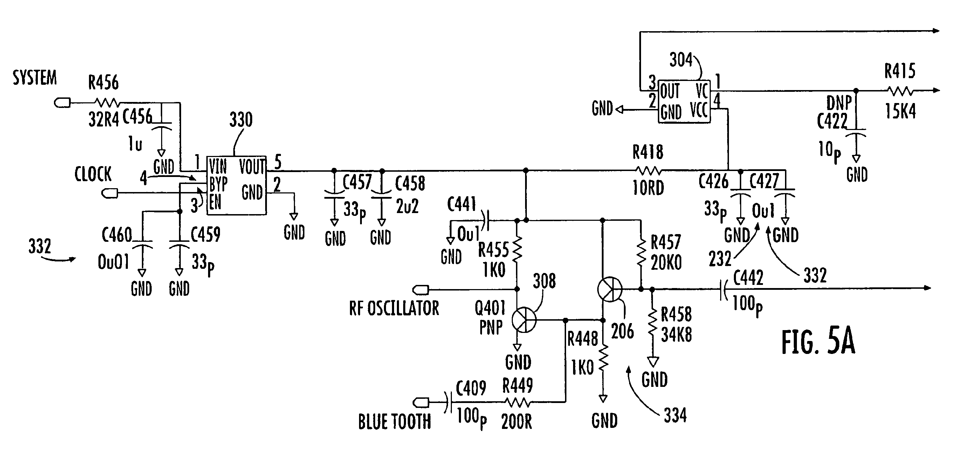

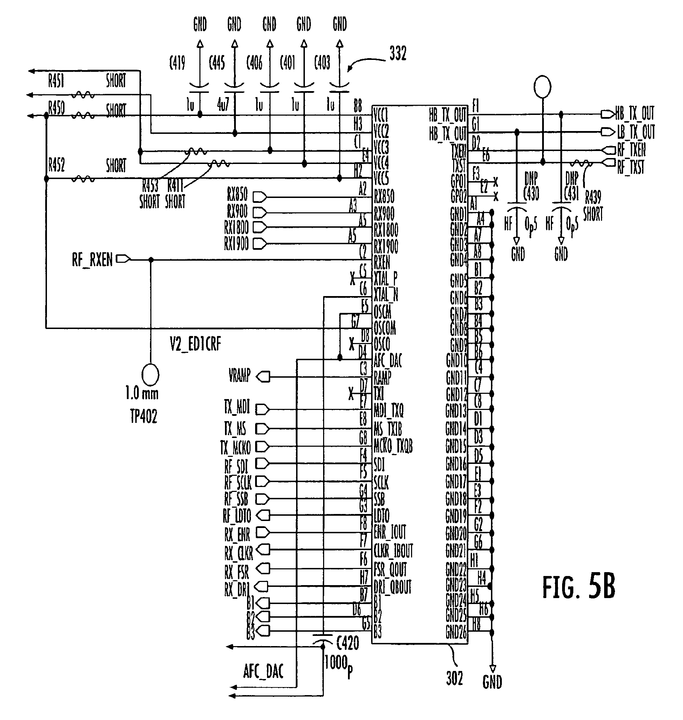

FIGS. 5A through 5C are interrelated schematic circuit diagrams showing portions of a radio transceiver **300** with various components, and an example of a clock buffering circuit as described for isolating different clock signals. A clock distribution network prevents and eliminates digital noise from the microprocessor **302** shown in FIG. 5B from transferring back to a Bluetooth circuit and further to other RF circuits.

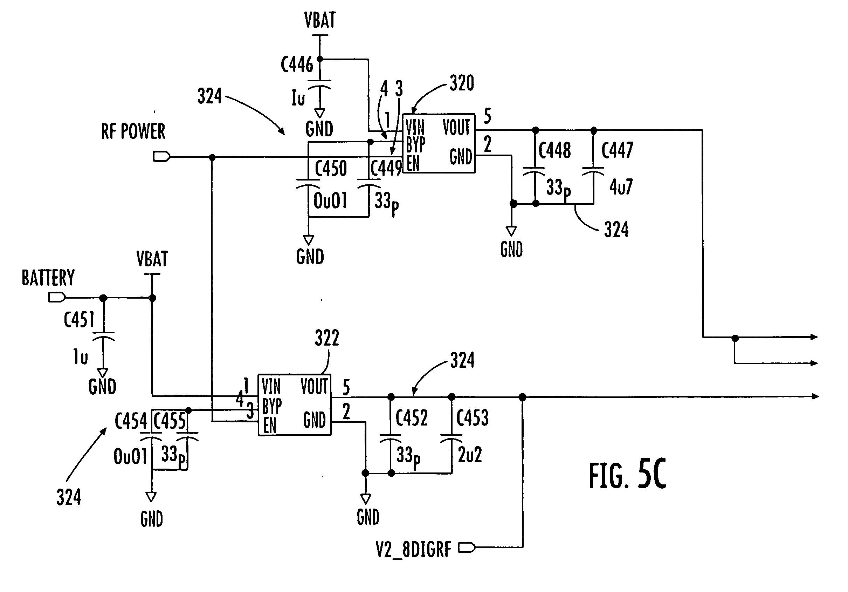

As illustrated, the output of crystal unit or oscillator **304** extends to the RF clock input directly. Although the clock **304** can operate at different frequencies, in one non-limiting example, the clock is about 26.0 MHz. This clock signal passes to a first buffer input formed by a transistor **306** as an NPN transistor. This is designed as an emitter follower and its output passes directly to a Bluetooth clock input 308. The output of this first buffer **306** also passes to the input of a second buffer **308** as a transistor, for example, a PNP transistor. Its collector output signal passes to the microprocessor. This type of circuit arrangement provides good noise rejection back to sensitive RF circuits. As illustrated, other components besides the microprocessor shown in FIG. 5B include circuit components **320, 322** (FIG. 5C) for RF power and battery power circuits, and including appropriate capacitor circuit **324**. The circuits shown in FIG. 5A also include components **330** with the clock and system terminals and various capacitor circuits **332** and resistor circuits **334** as illustrated.

It should be understood that the buffering circuits as described can be operative with many different types of Bluetooth chips. Typically, the Bluetooth chip is operative as a Bluetooth module and is operative as a wireless technology standard for connecting devices to replace cables. It typically operates in radio frequencies at a 2.5 GHz frequency band and can transmit short distances of about 10 meters or less. Usually it has a bandwidth of about one megabyte per second (1 MBPS) with individual packets of up to 2,745 bits. A class three Bluetooth device could have a signal strength up to about 100 milliwatts for a range of about 100 meters. Usually three basic components are included in a Bluetooth module, including a processor, a baseband link controller that manages core Bluetooth processes and a radio that implements the 2.5 GHz air interface. The Bluetooth architecture typically includes an application program interface (API) libraries that are software modules that connect to host application programs to a Bluetooth communication system. The logical link control and adaptation protocol manages high level aspects of each connection, including encryption. It can convert the format of data between application program interfaces and lower level Bluetooth protocols. The link manager can manage physical details for Bluetooth connections. The baseband is a digital engine of a Bluetooth system. The Bluetooth radio converts digital baseband data to an from the 2.4 GHz analog signal typically using Gaussian frequency shift keying (GFSK) modulation.

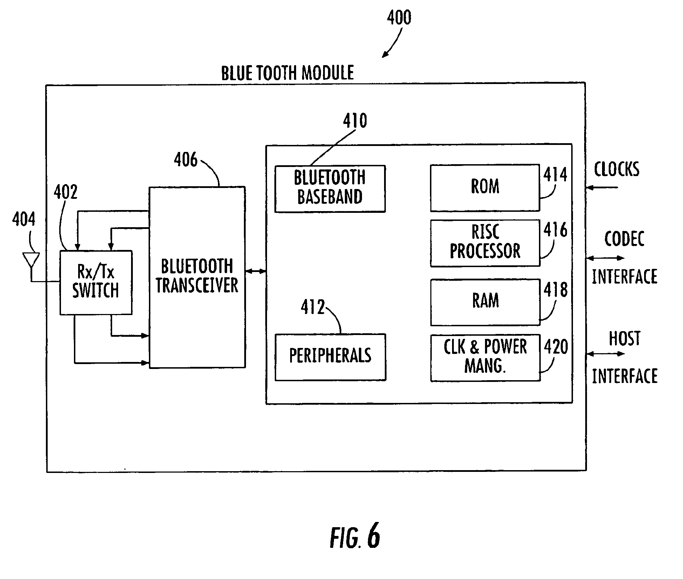

FIG. 6 is a block diagram of a single-chip Bluetooth circuit shown at **400,** for example, a BRF 6100/6150 chip that uses CMOS technology. As shown in FIG. 6, a receiver/transmitter switch **402** receives signals from an antenna **404.** The RF signals are transferred into and out of a Bluetooth transceiver **406.** The Bluetooth transceiver is operative with a module subgroup that includes a Bluetooth baseband circuit **410,** peripherals **412,** ROM **414,** a RISC processor **416,** RAM **418,** and clock and power management circuits **420.** The clock input, CODEC interface and host interface are illustrated. This type of module can work directly from a battery ranging from about 2.7 to about 5.4 volts in one non-limiting example and has improved radio frequency performance.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device (20) comprising:
a housing (21);
a circuit board (67) carried by the housing and including a processor (216), a radio frequency (RF) transceiver (202), and other RF circuitry (208) carried by the circuit board and operative with each other; and
clock buffer circuitry (200) carried by the circuit board and connected to the RF transceiver, other RF circuitry and microprocessor for isolating a clock signal from the noise of the microprocessor and allowing greater isolation for the RF transceiver from other RF circuitry,
wherein said clock buffer circuitry comprises a plurality of serially connected buffers (206, 210, 212) each having an output connected to a predetermined one of the other RF circuitry and microprocessor.

2. A mobile wireless communications device (20) according to Claim 1, wherein said other RF circuitry (208) comprises a Bluetooth module and said clock buffer circuitry (200) is connected to said Bluetooth module for isolating a clock signal after the RF transceiver (202).

3. A mobile wireless communications device (20) according to Claim 2, wherein said other RF circuitry (208) comprises a phased locked loop circuit and said clock buffer circuitry (200) is connected to said phase locked loop circuit for isolating a clock signal downstream from the RF transceiver (202) and Bluetooth module.

4. A mobile wireless communications device (20) according to Claim 1, wherein said RF transceiver (202) comprises a GSM/GPRS (Global System for Mobile communications/General Packet Radio Service).

5. A mobile wireless communications device (20) according to Claim 1, wherein each buffer (206, 210, 212) provides about 40 to about 80 decibels of reverse isolation from its output to its input.

6. A mobile wireless communications device (20) according to Claim 1, wherein said plurality of serially connected buffers (206, 210, 212) comprises transistors connected as emitter followers.

7. A mobile wireless communications device (20) according to Claim 1, wherein said housing (21) is configured for handheld operation.

8. A mobile wireless communications device (20) according to Claim 1, wherein said RF transceiver (202), other RF circuitry (208) and microprocessor (216) are operative as a cellular communications device.

9. A mobile wireless communications device (20) according to Claim 1, and further comprising an antenna (45) carried by the housing (21) and operative with the RF transceiver (202).

10. A mobile wireless communications device (20) according to Claim 9, wherein said antenna (45) is mounted within a lower portion of said housing (21).

11. A method of forming a mobile wireless communications device (20), which comprises:
providing a housing (21) and a circuit board (67) carried by the housing and including a microprocessor (216), radio frequency (RF) transceiver (202), and other RF circuitry (208) carried by the circuit board and operative with each other; and
isolating a clock signal within clock buffer circuit (200) that interconnects the microprocessor, RF transceiver and other RF circuitry from noise of the microprocessor and allowing greater isolation for the RF transceiver than other RF circuitry by forming serially connected buffers (206, 210, 212) each having an output connected to a predetermined one of the other RF circuitry and microprocessor.

12. A method according to Claim 11, wherein each buffer (206, 210, 212) provides about 40 to about 80 decibels of reverse isolation from its output to its input.

13. A method according to Claim 11, which further comprises isolating a clock signal for Bluetooth module after the RF transceiver (202).

14. A method according to Claim 13, which further comprises isolating a clock signal for a phase locked loop circuit after the Bluetooth module.

## Patentansprüche

1. Mobile drahtlose Kommunikationsvorrichtung (20), die umfasst:
Ein Gehäuse (21),
eine Leiterplatte (67), die von dem Gehäuse getragen ist und einen Prozessor (216), einen Funkfrequenz (RF)-Sender-Empfänger (202) und eine weitere RF-Schaltung (208), welche von der Leiterplatte getragen ist und miteinander wirksam sind, umfasst, und
eine Takt-Puffer-Schaltung (200), die von der Leiterplatte getragen ist und mit dem RF-Sender-Empfänger, der weiteren RF-Schaltung und einem Mikroprozessor zum Isolieren eines Taktsignales von dem Geräusch des Mikroprozessors und Ermöglichen einer größeren Isolierung für den RF-Sender-Empfänger von der weiteren RF-Schaltung verbunden ist,
wobei die Takt-Puffer-Schaltung eine Vielzahl von in Reihe verbundenen Puffern (206, 210, 212) umfasst, die jeweils einen Ausgang, welcher mit einem vorbestimmten der weiteren RF-Schaltung und des Mikroprozessors verbunden ist, aufweisen.

2. Mobile drahtlose Kommunikationsvorrichtung (20) nach Anspruch 1, wobei die weitere RF-Schaltung (208) ein Bluetooth-Modul umfasst und die Takt-Puffer-Schaltung (200) mit dem Bluetooth-Modul zum Isolieren eines Taktsignales nach dem RF-Sender-Empfänger (202) verbunden ist.

3. Mobile drahtlose Kommunikationsvorrichtung (20) nach Anspruch 2, wobei die weitere RF-Schaltung (208) eine phasengesteuerte geschlossene Schleifenschaltung umfasst und die Takt-Puffer-Schaltung (200) mit der phasengesteuerten geschlossenen Schleifenschaltung zum Isolieren eines Taktsignales abwärts von dem RF-Sender-Empfänger (202) und dem Bluetooth-Modul verbunden ist.

4. Mobile drahtlose Kommunikationsvorrichtung (20) nach Anspruch 1, wobei der RF-Sender-Empfänger (202) ein/en GSM/GPRS (Global System for Mobile communications/General Packet Radio Service) umfasst.

5. Mobile drahtlose Kommunikationsvorrichtung (20) nach Anspruch 1, wobei jeder Puffer (206, 210, 212) ungefähr 40 bis ungefähr 80 Dezibel einer Umkehrisolierung von deren Ausgang zu deren Eingang zur Verfügung stellt.

6. Mobile drahtlose Kommunikationsvorrichtung (20) nach Anspruch 1, wobei die Vielzahl von in Reihe verbundenen Puffern (206, 210, 212) Transistoren, die als Emitterfolger verbunden sind, umfasst.

7. Mobile drahtlose Kommunikationsvorrichtung (20) nach Anspruch 1, wobei das Gehäuse (21) für einen tragbaren Betrieb konfiguriert ist.

8. Mobile drahtlose Kommunikationsvorrichtung (20) nach Anspruch 1, wobei der RF-Sender-Empfänger (202), die weitere RF-Schaltung (208) und der Mikroprozessor (216) als zelluläre Kommunikationsvorrichtung wirksam sind.

9. Mobile drahtlose Kommunikationsvorrichtung (20) nach Anspruch 1, und weiterhin umfassend eine Antenne (45), die von dem Gehäuse (21) getragen ist und mit dem RF-Sender-Empfänger (202) wirksam ist.

10. Mobile drahtlose Kommunikationsvorrichtung (20) nach Anspruch 9, wobei die Antenne (45) in einem unteren Bereich des Gehäuses (21) angebracht ist.

11. Verfahren zum Bilden einer mobilen drahtlosen Kommunikationsvorrichtung (20), das umfasst:
Bereitstellen eines Gehäuses (21) und einer Leiterplatte (67), die von dem Gehäuse getragen ist und einen Mikroprozessor (216), einen Funkfrequenz (RF)-Sender-Empfänger (202) und eine weitere RF-Schaltung (208), welche von der Leiterplatte getragen ist und miteinander wirksam sind, umfasst, und
Isolieren eines Taktsignales in einer Takt-Puffer-Schaltung (200), welche den Mikroprozessor, den RF-Sender-Empfänger und die weitere RF-Schaltung miteinander verbindet, von einem Geräusch des Mikroprozessors und Ermöglichen einer größeren Isolierung für den RF-Sender-Empfänger als die weitere RF-Schaltung durch Bilden von in Reihe verbundenen Puffern (206, 210, 212), die jeweils einen Ausgang, welcher mit einem vorbestimmten der weiteren RF-Schaltung und des Mikroprozessors verbunden ist, aufweisen.

12. Verfahren nach Anspruch 11, wobei jeder Puffer (206, 210, 212) ungefähr 40 bis ungefähr 80 Dezibel einer Umkehrisolierung von deren Ausgang zu deren Eingang zur Verfügung stellt.

13. Verfahren nach Anspruch 11, das weiterhin ein Isolieren eines Taktsignales für ein Bluetooth-Modul nach dem RF-Sender-Empfänger (202) umfasst.

14. Verfahren nach Anspruch 13, das weiterhin ein Isolieren eines Taktsignales für eine phasengesteuerte geschlossene Schaltung nach dem Bluetooth-Modul umfasst.

## Revendications

1. Dispositif de communication mobile sans fil (20), comprenant :
un boîtier (21) ;
une carte de circuits (67) supportée par le boîtier et comprenant un processeur (216), un émetteur-récepteur de fréquences radio (RF) (202) et un autre ensemble de circuits RF (208), supportés par la carte de circuits et coopérant ensemble ; et
un ensemble de circuits tampons d'horloge (200), supporté par la carte de circuits et connecté à l'émetteur-récepteur RF, à l'autre ensemble de circuits RF et au microprocesseur, destiné à isoler un signal d'horloge du bruit du microprocesseur et à permettre une meilleure isolation de l'émetteur-récepteur RF par rapport à l'autre ensemble de circuits RF,
l'ensemble de circuits tampons d'horloge comprenant une pluralité de tampons (206, 210, 212) montés en série, chacun ayant une sortie connectée à un autre élément prédéterminé parmi l'autre ensemble de circuits et le microprocesseur.

2. Dispositif de communication mobile sans fil (20) selon la revendication 1, dans lequel ledit autre ensemble de circuits RF (208) comprend un module Bluetooth et l'ensemble de circuits tampons d'horloge (200) est connecté audit module Bluetooth afin d'isoler un signal d'horloge après l'émetteur-récepteur RF (202).

3. Dispositif de communication mobile sans fil (20) selon la revendication 2, dans lequel ledit autre ensemble de circuits RF (208) comprend un circuit de boucle verrouillée en phase et l'ensemble de circuits tampons d'horloge (200) est connecté audit circuit de boucle verrouillée en phase afin d'isoler un signal d'horloge en aval de l'émetteur-récepteur RF (202) et du module Bluetooth.

4. Dispositif de communication mobile sans fil (20) selon la revendication 1, dans lequel ledit émetteur-récepteur RF (202) comprend un système GSM/GPRS, pour *« Global System for Mobile communication »* - Système mondial de communication mobile et *« General Packet Radio Service »* - Service général de radiocommunication par paquets.

5. Dispositif de communication mobile sans fil (20) selon la revendication 1, dans lequel chaque tampon (206, 210, 212) fournit environ 40 à environ 80 décibels d'isolation inverse entre sa sortie et son entrée.

6. Dispositif de communication mobile sans fil (20) selon la revendication 1, dans lequel ladite pluralité de tampons montés en série (206, 210, 212) comprend des transistors montés en émetteurs suiveurs.

7. Dispositif de communication mobile sans fil (20) selon la revendication 1, dans lequel ledit boîtier (21) est configuré pour un fonctionnement tenu en main.

8. Dispositif de communication mobile sans fil (20) selon la revendication 1, dans lequel ledit émetteur-récepteur RF (202), ledit autre ensemble de circuits RF (208) et ledit microprocesseur (216) forment un dispositif de communication cellulaire.

9. Dispositif de communication mobile sans fil (20) selon la revendication 1, comprenant en outre une antenne (45) supportée par le boîtier (21) et fonctionnant avec l'émetteur-récepteur RF (202).

10. Dispositif de communication mobile sans fil (20) selon la revendication 9, dans lequel ladite antenne (45) est montée dans une partie inférieure dudit boîtier (21).

11. Procédé de formation d'un dispositif de communication mobile sans fil (20), comprenant les étapes consistant à:
fournir un boîtier (21) et une carte de circuits (67) supportée par le boîtier et comprenant un processeur (216), un émetteur-récepteur de fréquences radio (RF) (202) et un autre ensemble de circuits RF (208), supportés par la carte de circuits et coopérant ensemble ; et
isoler un signal d'horloge au sein d'un circuit tampon d'horloge (200) qui interconnecte le microprocesseur, l'émetteur-récepteur RF et l'autre ensemble de circuits RF, du bruit du microprocesseur et permettre une meilleure isolation de l'émetteur-récepteur RF que l'autre ensemble de circuits RF en formant des tampons (206, 210, 212) montés en série, chacun ayant une sortie connectée à un autre élément prédéterminé parmi l'autre ensemble de circuits et le microprocesseur.

12. Procédé selon la revendication 11, dans lequel chaque tampon (206, 210, 212) fournit environ 40 à environ 80 décibels d'isolation inverse entre sa sortie et son entrée.

13. Procédé selon la revendication 11, comprenant en outre l'étape consistant à isoler un signal d'horloge pour module Bluetooth après l'émetteur-récepteur RF (202).

14. Procédé selon la revendication 13, comprenant en outre l'étape consistant à isoler un signal d'horloge pour un circuit de boucle verrouillée en phase après le module Bluetooth.
